# FASCICULE DE BREVET EUROPEEN

(11) **EP 0 988 160 B1**
(45) Date de publication et mention de la délivrance du brevet: **06.03.2002**
(21) Numéro de dépôt: 98925760.5
(22) Date de dépôt: 20.05.1998
(51) Int. Cl.: B60C 23/06

(54) **SURVEILLANCE D'UN PNEUMATIQUE PAR MESURE D'ACCELERATION**
REIFEN KONTROLL SYSTEM DURCH BESCHLEUNIGUNGSMESSUNG
MONITORING A TYRE BY ACCELERATION MEASUREMENT

(30) Priorité: 10.06.1997 FR 9707180
(43) Date de publication de la demande: 29.03.2000
(73) Titulaire: THALES SYSTEMES AEROPORTES S.A., 78990 Elancourt (FR)
(72) Inventeur: MORAND, Jean-François, F-75116 Paris (FR); SIRVEN, Jacques, F-78000 Versailles (FR)
(74) Mandataire: Plaçais, Jean-Yves
(86) Numéro de dépôt international: FR9801014
(87) Numéro de publication internationale: WO9856606

(56) Documents cités:
- EP-A- 0 197 813
- EP-A- 0 563 713
- EP-A- 0 641 679
- WO-A-93/25400
- GB-A- 2 307 044
- US-A- 4 578 992
- "PIEZOELECTRIC POWERED (BATTERYLESS) RADIO FREQUENCY IDENTIFICATION TAG FOR TIRES" IBM TECHNICAL DISCLOSURE BULLETIN, vol. 39, no. 8, août 1996, page 245/246 XP000638201

## Description

L'invention concerne la surveillance en service de l'état d'un pneumatique d'une roue d'un véhicule.

Il s'agit d'un besoin fondamental: on sait les dégâts qui peuvent résulter par exemple du sous-gonflage d'un pneumatique et la gravité du contentieux qui peut en résulter.

De très nombreuses solutions ont été proposées, articulées le plus souvent sur des capteurs de pression, fréquemment incorporés à la valve du pneumatique, en tout cas accessibles du côté de la jante. Les contraintes applicables sont assez draconiennes, puisqu'il faut notamment respecter l'équilibrage de la roue. Or, pour être précis, les capteurs de pression sont généralement assez volumineux et lourds en particulier s'ils contiennent la source d'énergie. De plus, la mesure de pression (relative) nécessite une référence, qui est, en général, la pression atmosphérique fonction de l'altitude et demeure très sensible à d'autres paramètres, dont la température.

Aucune des solutions actuelles n'est véritablement générale. En effet, le problème posé, déjà complexe, s'accompagne de la nécessité de transmettre l'information de la roue au véhicule, compte-tenu d'une rotation relative variable de la vitesse nulle à des vitesses très élevées. Tout cela se traduit par un prix prohibitif, hormis quelques exceptions, comme le cas des poids lourds.

La présente invention vient améliorer la situation.

Pour cela, il est proposé un procédé de surveillance en service de l'état d'un pneumatique d'une roue, caractérisé par les étapes consistant à:
- prévoir dans le pneumatique, près de la bande de roulement, un capteur miniature sensible à l'accélération, et
- surveiller les variations de la mesure de ce capteur, les mesures faites dans la zone où la bande de roulement est au contact du sol étant liées à la taille de cette zone, et, par là, à l'état du pneumatique.

L'invention vise aussi un dispositif de surveillance en service de l'état d'un pneumatique d'une roue d'un véhicule, du type comprenant un capteur monté sur la roue, des moyens de couplage pour transmettre au véhicule des indications tirées de ce capteur, et des moyens d'alimentation électrique. Selon l'invention, le capteur est un capteur miniature sensible à l'accélération, implanté dans la bande de roulement du pneumatique ou au voisinage de celle-ci; et les moyens de couplage, montés sur la roue, transmettent des indications relatives aux mesures faites au moment où la bande de roulement est au contact du sol.

L'invention couvre également le pneumatique équipé en conséquence.

D'autres caractéristiques et avantages de l'invention apparaîtront à l'examen de la description détaillée ci-après, et des dessins annexés, sur lesquels:
- la figure 1 illustre schématiquement un pneumatique, monté sur une roue, et en charge;
- la figure 2 illustre l'implantation d'un accéléromètre dans le pneumatique de la figure 1;
- la figure 3 illustre des circuits électroniques relatifs à un mode de réalisation de l'invention;
- la figure 4 illustre le mode d'échange d'informations entre la roue et le véhicule, ainsi que le passage de l'alimentation électrique;
- la figure 5 illustre la forme d'un pneumatique en charge;
- la figure 6 illustre schématiquement l'allure générale de l'accélération;
- les figures 7 (a et b) illustrent schématiquement une première forme d'accéléromètre applicable à l'invention;
- la figure 8 illustre la tension aux bornes du capteur piézo-électrique des figures 7 pour différentes vitesses de rotation en fonction de l'angle de roue;
- la figure 9 illustre la relation entre l'accélération vraie et la tension crête mesurée du fait du limiteur d'accélération des Figures 7;
- la figure 10 illustre schématiquement une seconde forme d'accéléromètre applicable à l'invention;
- les figures 11 (a et b) illustrent des réalisations des boucles de couplage incluses dans le pneumatique; et
- la figure 12 illustre les installations relatives des boucles et leur couplage.

Les dessins annexés sont, en majeure partie, de caractère certain, s'agissant notamment de formes. En conséquence, ils pourront non seulement servir à mieux faire comprendre la description, mais aussi contribuer à la définition de l'invention, le cas échéant.

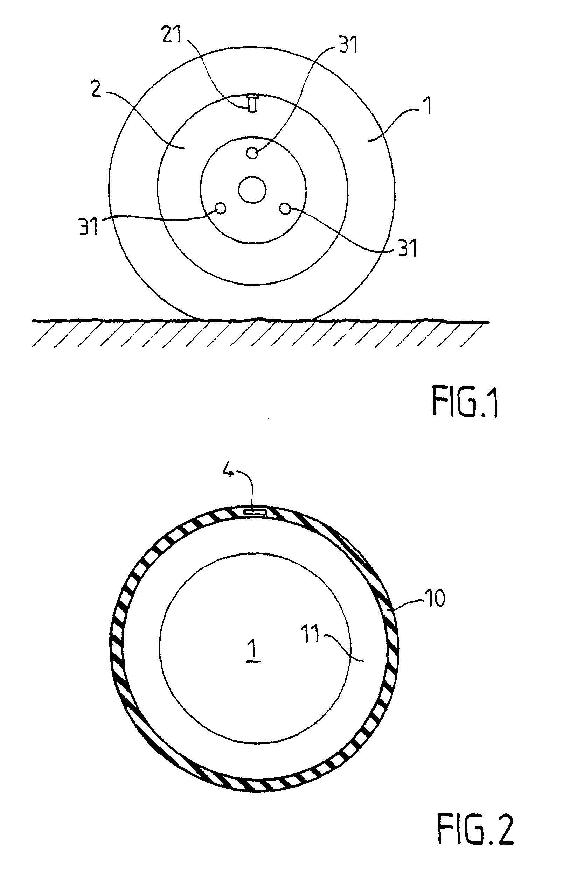

Sur la figure 1, une jante 2, munie de points de fixation 31 sur le moyeu, supporte un pneumatique 1 (supposé ici sans chambre à air), et la valve de gonflage (21) de celui-ci.

La figure 2 montre le pneumatique, avec l'un des flancs 11, et sa bande de roulement 10 vue en coupe. Celle-ci loge un accéléromètre 4, placé de préférence dans la chape du pneu ou à l'intérieur contre la nappe de renfort.

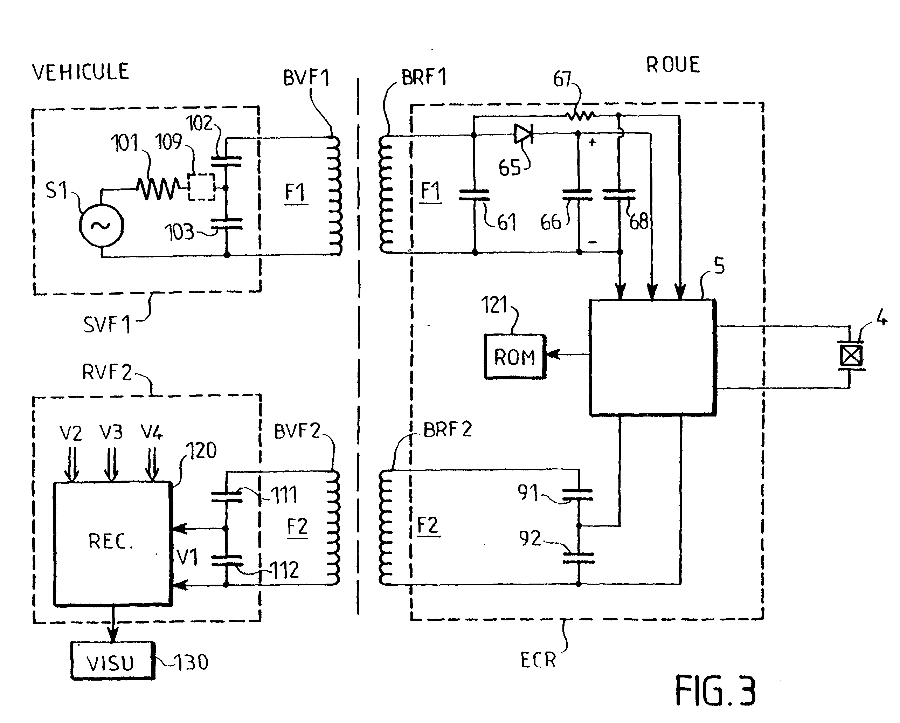

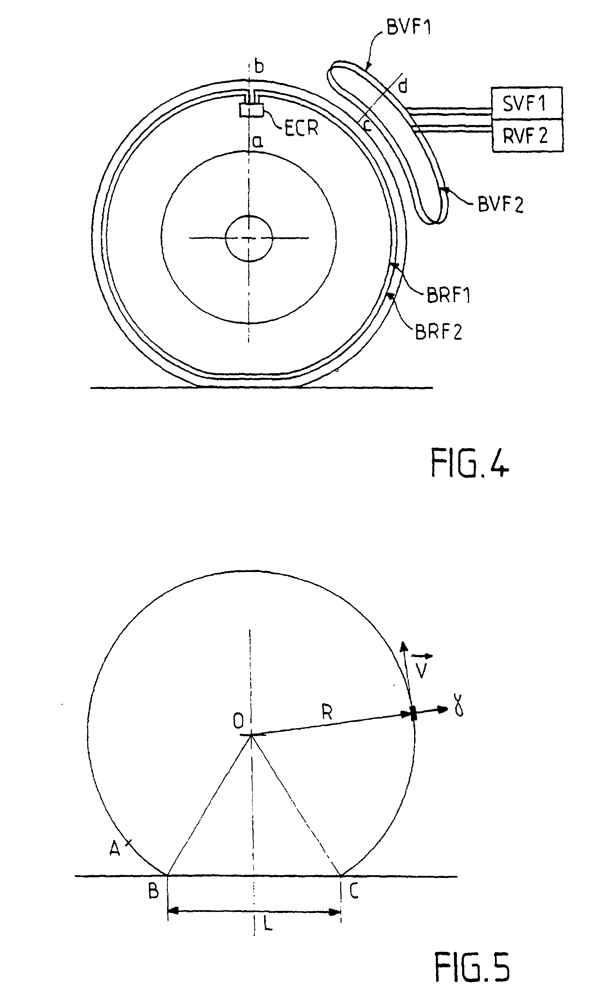

Le circuit électronique d'ensemble du mode de réalisation actuellement préféré apparaît sur la figure 3, avec des détails d'implantation en figure 4. Sur la figure 3, la partie située à gauche du trait tireté long est sur le véhicule; celle de droite est sur la roue, plus précisément dans le pneumatique.

L'accéléromètre 4 est associé à un microcircuit électronique 5. Celui-ci peut être alimenté de diverses manières: pile, récupération d'énergie mécanique, notamment.

On préfère ici prévoir une alimentation par couplage électrique, magnétique ou électromagnétique avec le véhicule. Il est prévu dans le pneumatique une boucle (ouverte) BRF1. Le circuit d'ensemble ECR comprend un condensateur 61 pour l'accord de cette boucle sur la fréquence F1, et un redresseur à diode 65 et condensateur 66 pour stocker l'énergie et filtrer la tension. La tension obtenue alimente le circuit 5 de traitement des mesures du capteur 4.

Côté véhicule, une source SI de tension alternative à la fréquence F1, de résistance interne 101, alimente un diviseur capacitif d'accord 102-103, puis une boucle BVF1, montée (figure 4) pour être couplée avec la boucle BRF1 sur une partie de la périphérie du pneu. La taille de la boucle BVF1 peut correspondre à environ 1/10 du développement du pneu. L'illustration de la boucle BRF1 est ici séparée de la partie de la périphérie du pneu, pour qu'on la distingue de la boucle BRF2, dont il sera question ci-après.

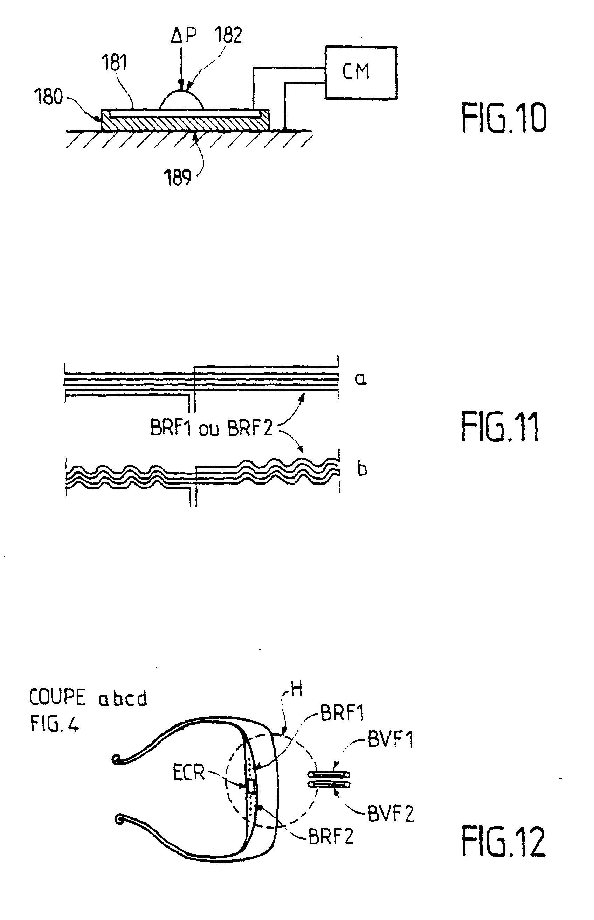

La figure 12 permet de mieux comprendre la position relative dans le pneumatique des boucles BFR1 et BRF2 associées au circuit ECR, dans un mode de réalisation.

La boucle BRF1 ainsi faite permet un couplage permanent de l'alimentation fournie par la boucle BVF1.

Une telle émission de l'ordre d'un Watt permet d'obtenir au moins quelques milliwatts d'alimentation continue pour le circuit ECR, quelles que soient les positions relatives de la roue et du véhicule (suspension et direction, notamment).

On décrira maintenant le transfert des mesures. La sortie du circuit de traitement 5 est une tension de fréquence F2 modulée, et appliquée à travers un diviseur capacitif d'accord 91-92 à une boucle BRF2 du pneu. Côté véhicule, une boucle BVF2 est munie de deux condensateurs 111-112 d'accord. Ceux-ci fournissent une sortie asymétrique, appliquée à un circuit de réception et traitement 120. Outre la voie V1 provenant du pneumatique considéré, ce circuit 120 peut recevoir trois autres voies V2, V3 et V4 venant des autres pneumatiques. L'émission à partir des voies V1, V2, V3 et V4 vers le circuit de réception 120 peut se faire séparément ou en parallèle. Un organe de visualisation 130 lui est associé, ou mieux le transfert de l'information se fait par l'intermédiaire du calculateur de bord relié à une visualisation intégrée.

De même, par symétrie, le couplage de la boucle BRF2 avec la boucle BVF2 est permanent.

Une émission par la boucle BRF2 de l'ordre d'un milliWatt permet d'obtenir quelques microwatts en sortie de la boucle BVF2 associée au véhicule. Ce niveau est largement suffisant pour traiter l'information, tout en demeurant suffisamment faible pour ne pas perturber l'environnement électromagnétique.

La fréquence F1 est par exemple comprise entre 10 et 200 kHz, de préférence vers 50 kHz. La fréquence F2 est choisie nettement différente pour éviter le couplage entre elles des boucles BRF1 avec BRF2, et BVF1 avec BVF2; F2 est de préférence plus élevée, vers 80 kHz par exemple.

Les boucles BRF1 ou BRF2 incluses dans le pneu sont bobinées de façon à permettre une élasticité longitudinale pour une mise en place aisée. Plutôt qu'un procédé de bobinage classique (Figure 11a), on crée une ondulation, comme le montre la figure 11b par exemple. En outre, pour assurer la tenue mécanique des boucles sur la durée de vie du pneu, il est avantageux d'utiliser du fil divisé pour la réalisation desdites boucles.

Les bobines peuvent être incorporées au pneu dans sa chape, au dessus de son armature (radialement vers l'extérieur), l'armature étant métallique ou non. Toutefois, ceci impose de prévoir les connexions à ces bobines au cours de la fabrication du pneu. Une variante intéressante (figure 12) consiste à placer les bobines sur le moule servant à la fabrication du pneu, lequel est alors implanté autour des bobines ; on peut alors obtenir une meilleure tenue mécanique (comportement élastique sous contraintes) des bobines, et leurs connexions peuvent être soudées préalablement, l'ensemble bobines et circuit ECR formant un sous-ensemble modulaire.

La Demanderesse a également observé qu'aux fréquences considérées, il est avantageux d'utiliser des fils isolés, en particulier des fils dits de Litz (connus dans les bobinages des postes radio à modulation d'amplitude, ondes longues et/ou moyennes).

Le principe général de ces boucles est connu, et décrit notamment dans EP-A-551470. On pourrait d'ailleurs utiliser ces dernières boucles telles quelles, sous réserve de prévoir un branchement entre le pneu et lesdites boucles. De façon générale, et quel qu'en soit l'usage, le recours à des branchements (couplages électriques) n'est pas exclu de la présente invention. N'est pas exclu non plus le recours à des couplages par effets essentiellement magnétiques.

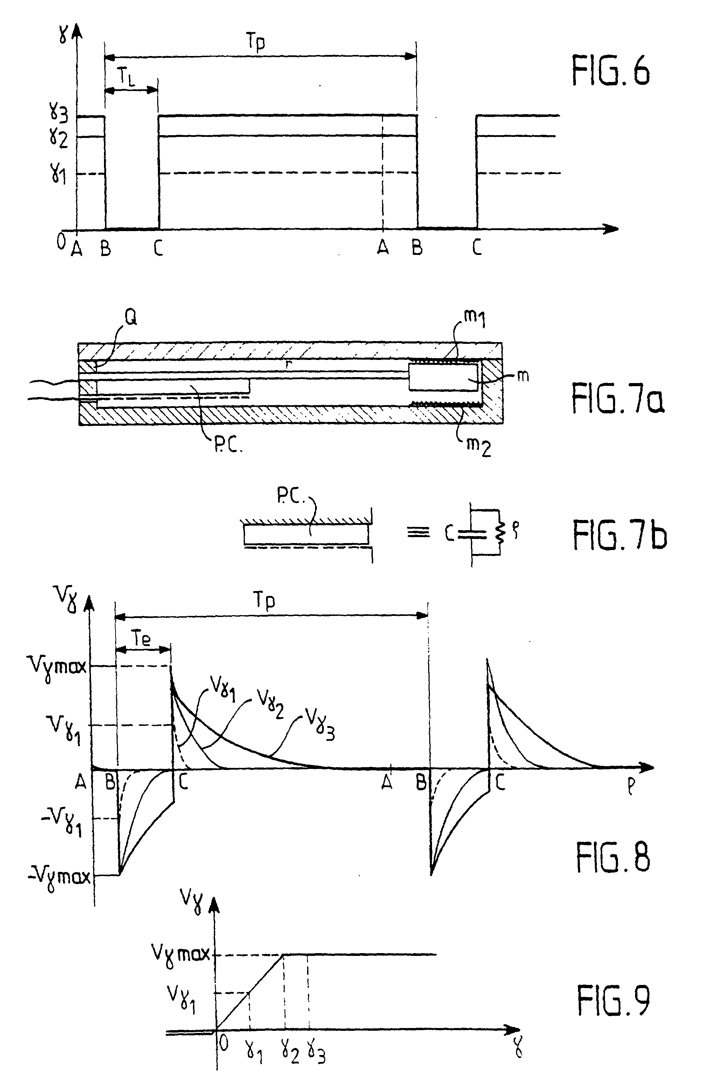

Sur la figure 5, un pneu de rayon R est animé d'une vitesse périphérique V. En charge, une zone BC de ce pneu, de longueur L, est au contact du sol.

Au point A, l'accélération radiale centrifuge est V²/R. La Demanderesse a observé qu'entre les points B et C, par contre, l'accélération radiale centrifuge est sensiblement nulle, la vitesse différentielle du pneu par rapport au sol étant sensiblement nulle (sauf en cas de patinage, ce qui n'est pas un fonctionnement normal).

Par l'implantation d'un accéléromètre miniature dans le pneu, on peut donc détecter la zone BC. Le passage de l'accélération radiale - ou centrifuge, normale au sol - à une valeur sensiblement nulle, permet d'identifier temporellement l'ensemble de la zone BC. (Les points B et C pourraient également être détectés en s'intéressant à des discontinuités de l'accélération tangentielle, dans le plan du sol. Il serait concevable d'utiliser en partie au moins cet effet).

On préfère actuellement traiter seulement l'accélération radiale, dont l'allure est donnée sur la figure 6. Pour différentes vitesses V1, V2 et V3, on obtient des accélérations γ₁, γ₂ et γ₃. L'accélération est quasi nulle pendant l'intervalle de temps TL, qui correspond au trajet de l'accéléromètre entre les points B et C. Elle est forte le reste du temps, dès que le véhicule atteint une vitesse de quelques kilomètres/heure. La période Tp de rotation du pneu est également donnée par les mesures. On en déduira aisément la vitesse du véhicule, le diamètre de la roue étant connu (habituellement à mieux que 1%).

La longueur L est fonction:
a) - de la partie de la masse M du véhicule, ou charge de roue, qui est reportée sur la roue considérée,
b) - de la pression (différentielle, non absolue) du pneu, elle même fonction de la température et de la variation de la pression atmosphérique due principalement à l'altitude,
c) - de la vitesse tangentielie V, dans la mesure où la force centrifuge n'est pas compensée dans la zone BC d'appui au sol (il en résulte un phénomène de décalage vers le haut du pneu par rapport à la jante, observable en prises de vue à vitesse élevée).

Les facteurs a) et c) sont déterminables par un calcul aisément accessible à bord du véhicule. On en tire donc la pression. Il est à remarquer que la loi reliant la longueur L à la vitesse V et à la charge de roue peut être tabulée pour le véhicule considéré, en fonction de la température ambiante. Aux faibles vitesses, l'effet de la charge de roue est prédominant; on peut donc affiner la prise en compte de cette charge de roue, si nécessaire, ou comparer différentiellement les paires de roues Avant et Arrière, entre elles et de paire à paire.

Il suffit alors de mesurer et transmettre les durées TL et Tp du pneu au véhicule. Ceci peut se faire par une modulation analogique ou numérique de la porteuse F2 par les signaux d'accélération.

Il est aisé d'adjoindre au circuit 5 un circuit sensible à la température, par exemple une diode. L'information température est alors disponible, et peut être transmise avec l'information d'accélération.

Différents types de modulations analogiques peuvent convenir. Le plus simple est une modulation d'amplitude par le signal de la figure 6: on émet pendant les périodes TL. Des modulations beaucoup plus évoluées sont envisageables. Le cas échéant, la température est transmise par modulation de fréquence ou de phase de la porteuse F2.

En numérique, on peut mesurer les temps TL et Tp dans le circuit 5, en faire la moyenne avec une constante de temps appropriée, et transmettre ces mesures moyennes au véhicule. Le circuit 5 dispose d'une horloge pour créer la fréquence F2 dont la stabilité est compatible avec la bande d'accord des boucles. En outre, on peut utiliser la fréquence F1 de l'alimentation pour stabiliser ou caler cette horloge. Il a été observé expérimentalement qu'il apparaît une variation de la bande d'accord des boucles, mais cette variation reste suffisamment limitée pour ne pas gêner le fonctionnement.
Cette horloge F2 sert, après division, à compter les durées TL et Tp. Et la moyenne se fait par simple accumulation d'un nombre de mesures prédéterminé, ou choisi en fonction de la qualité des mesures, par exemple. La porteuse transmet l'horloge de mesure. Le cas échéant, la température est transmise comme autre donnée.

Qu'il soit analogique ou numérique, ce circuit 5 est donc très simple, et peut avoir une faible consommation électrique.

Le principe d'un accéléromètre utilisable est illustré sur la figure 7A. Une masse m est solidaire d'une lame de ressort r encastrée en Q. Un capteur piézo-électrique PC est fixé à la partie inférieure de la lame de ressort; celle-ci, en se déformant sous l'effet de force centrifuge principalement concentrée dans la masse m, comprime le composant PC qui fournit la mesure, sous forme de tension (sans devoir être lui-même alimenté). Cette tension varie en fonction du temps et dépend de la vitesse, ainsi que de la constante de temps du circuit ρC (capacité C shuntée par une résistance de fuite ρ, comme illustré en figure 7b).

On notera que les fortes accélérations ne sont pas intéressantes. Un écrêtage est donc réalisé entre les deux butées m₁ et m₂. Il s'agit en fait d'un accéléromètre à seuil voisin de zéro, capable d'indiquer, en tout ou rien, si l'accélération est quasi-nulle ou non. Un amortissement convenable est prévu pour éviter le bruit produit par le choc de la masse m sur les faces du boîtier qui limitent la course donc écrête l'effet d'accélération.

Une variante est illustrée sur la figure 10. Un boîtier 180 forme une chambre "anéroïde", avec en partie supérieure une membrane métallisée 181, munie d'une masse 182. L'intérieur du boîtier est sous vide (non poussé), comme dans un baromètre mécanique. Une mesure de capacité CM est effectuée entre la masse 182, plan inférieur du boîtier, et la membrane 181. Pour cette mesure de capacité, on dispose de la source de fréquence F2, et par exemple, d'une capacité étalon. A l'arrêt, la mesure indique la pression du pneu, à la précision réduite qui suffit pour indiquer si le pneu est en état de rouler, ou non; en marche, au passage de la zone BC, la mesure varie brutalement, ce qui sert comme précédemment. Il est possible aussi d'écrêter la valeur de l'accélération en limitant comme plus haut la course de la masse 182.

Dans ce second mode de réalisation, on obtient donc un capteur combiné de pression et d'accélération. On peut naturellement utiliser des capteurs séparés.

Par ailleurs, au lieu de la mesure capacitive des déplacements de la membrane 181, on peut prévoir d'autres techniques, par exemple quatre jauges de contraintes montées en pont sur la membrane.

Quel que soit son mode de réalisation mécanique, le capteur va présenter une fréquence propre (résonance). Quant au pneu, il est également le siège de phénomènes périodiques (à court terme), dont la périodicité de rotation de la roue, qui correspond à des fréquences allant de 0 à la centaine de Hertz (50 tours de roue par seconde font de l'ordre de 100 mètres par seconde, soit 360 Km/heure). On choisira la fréquence propre du capteur à l'extérieur de cette bande, et/ou on s'en servira pour améliorer la qualité de la réponse en fonction de la période de rotation de la roue, donc de la vitesse du véhicule.

La Demanderesse a observé que la transmission par les boucles BRF1 et BVF1 (et/ou BRF2 et BVF2) peut aisément être rendue bi-directionnelle. Il est alors intéressant d'adjoindre une mémoire non volatile 121, de type epROM ou eepROM au circuit dans le pneu. En augmentant temporairement, si besoin est, la puissance d'alimentation, le circuit 5 pourra inscrire dans cette mémoire des informations qui lui reviennent de l'unité 120, par exemple:
- nombre de tours de roue sur un temps T, qui correspond au nombre de kilomètres effectués par le pneu sur le temps T,
- nombre de tours de roue ou de kilomètres effectués en sous gonflage,
- vitesse maximum rencontrée, éventuellement dans la mesure où elle dépasse les spécifications prévues pour le pneu,
- durée d'une baisse de pression, pour vérifier si le pneu n'a pas été utilisé en dehors de ses spécifications,
- durée d'une surcharge.
   Ces quantités peuvent être enregistrées en valeurs ponctuelles et/ou en cumul. Les calculs requis peuvent être conduits dans le calculateur de bord du véhicule, ou bien, la puissance de traitement (calcul) requise étant faible, dans le processeur logé dans le pneu. Dans ce dernier cas, le véhicule indique simplement au pneu le moment où il faut faire ces opérations (synchronisation), en lui fournissant le complément d'énergie requis, si nécessaire.

Si les calculs sont faits à bord du véhicule, on peut par exemple (Figure 3) prévoir un modulateur 109 en aval de la résistance 101, et, côté réception, une liaison par résistance série 67, et capacité parallèle 68 vers la masse, partant de l'une des bornes de la bobine BRF1 pour aboutir à une entrée de données (à cadence lente) de l'unité 5.

On obtient ainsi une sorte de "fiche historique" incorporée au pneu lui-même, avec éventuellement une copie-image à bord du véhicule. L'inscription dans cette fiche peut être déclenchée automatiquement, avantageusement à l'arrêt du véhicule (coupure du contact par exemple), et/ou à son redémarrage. La mise à jour de la fiche historique se fait ainsi à chaque utilisation du véhicule. Un avantage important de l'inscription dans le pneumatique est le suivant: il suffit de disposer du pneumatique pour pouvoir suivre son évolution propre, indépendamment de la roue et du véhicule.

La commutation du circuit 5 en réception sur la boucle BRF2 se fait de préférence par l'apparition d'une surtension appliquée sur la boucle BVF1. Cette surtension est actuellement jugée très avantageuse pour avoir une énergie suffisante à une bonne inscription en mémoire des paramètres transmis du véhicule vers la roue concernée. Un circuit semblable à celui utilisé sur le véhicule pour une roue peut servir de banc de test pour lire les inscriptions mises en mémoire dans le pneumatique et en assurer la gestion.

De même, l'interaction des boucles BRF2 et BVP2 peut être utilisée à d'autres fins que l'alimentation électrique. On peut par exemple superposer à l'alimentation une horloge, une référence de temps, ou un autre signal utile.

Dans certaines applications au moins, il serait envisageable d'utiliser les mêmes boucles pour l'alimentation et la transmission des données, du fait que les boucles sont bidirectionnelles, et/ou que la transmission des données se fasse en modulation par absorption de l'alimentation (l'appel de puissance est plus ou moins grand en fonction d'un signal binaire à transmettre). Sur un autre plan, et dans une version très simple, on pourrait utiliser un accéléromètre à seuil qui actionne directement un contact électrique (ce dernier commandant éventuellement l'absorption de puissance, si l'on combine ceci aux variantes précédentes).

## Revendications

1. Procédé de surveillance en service de l'état d'un pneumatique (1) d'une roue, **caractérisé par** les étapes consistant à:
- prévoir dans le pneumatique (1), près de la bande de roulement (10), un capteur miniature (4) sensible à l'accélération (γ), et
- surveiller les variations de la mesure de ce capteur (4), les mesures faites dans la zone (BC) où la bande de roulement est au contact du sol étant liées à la taille de cette zone (BC), et, par là, à l'état du pneumatique (1).

2. Procédé selon la revendication 1, **caractérisé en ce que** le capteur (4) est disposé pour être sensible à l'accélération radiale (γ).

3. Procédé selon l'une des revendications 1 et 2, **caractérisé en ce que** l'on repère le moment (TL) où la bande de roulement (10) est au contact du sol par une variation sensible de l'accélération (γ).

4. Procédé selon l'une des revendications 1 à 3, **caractérisé en ce que** l'on détecte également la période (Tp) des moments où la bande de roulement (10) est au contact du sol, qui est liée à la vitesse de rotation (V) de la roue.

5. Procédé selon l'une des revendications précédentes, **caractérisé en ce qu'**une partie au moins des mesures (TL,Tp) est transmise au véhicule par couplage électrique, magnétique ou électro-magnétique.

6. Procédé selon l'une des revendications précédentes, **caractérisé en ce que** les mesures (TL, Tp) portent au moins sur la période des phases d'accélération faible, et sur la fraction de cette période qu'elles occupent.

7. Procédé selon l'une des revendications précédentes, **caractérisé en ce que** le capteur (4) est alimenté par une pile également logée dans le pneumatique (1).

8. Procédé selon l'une des revendications précédentes, **caractérisé en ce que** le capteur est alimenté par couplage électrique, magnétique ou électro-magnétique (BVF1,BRF1).

9. Procédé selon l'une des revendications précédentes, **caractérisé en ce que** l'on prévoit en outre dans le pneumatique (1) un capteur miniature de pression (180).

10. Procédé selon l'une des revendications précédentes, **caractérisé en ce que** l'on prévoit en outre un banc de test capable de lire des inscriptions mises en mémoire dans le pneumatique (1) après démontage de celui-ci.

11. Dispositif de surveillance en service de l'état d'un pneumatique (1) d'une roue d'un véhicule, du type comprenant:
- un capteur (4) monté sur la roue,
- des moyens de couplage (BVF2,BRF2) pour transmettre au véhicule des indications tirées de ce capteur (4), et
- des moyens d'alimentation électrique (SVF1,BVF1,BRF1),
**caractérisé en ce que** le capteur (4) est un capteur miniature sensible à l'accélération (γ), implanté dans la bande de roulement (10) du pneumatique (1) ou au voisinage de celle-ci, et **en ce que** les moyens de couplage, montés sur la roue, transmettent des indications (TL,Tp) relatives aux mesures faites au moment où la bande de roulement (10) est au contact du sol.

12. Dispositif selon la revendication 11, **caractérisé en ce que** le capteur (4) est disposé pour être sensible à l'accélération radiale (γ).

13. Dispositif selon la revendication 12, **caractérisé en ce que** le capteur (4) est agencé pour écrêter les accélérations radiales (γ₁,γ₂,γ₃) vers l'extérieur.

14. Dispositif selon l'une des revendications 11 à 13, **caractérisé en ce que** le capteur (4) comporte des moyens sensibles à la pression, sur lesquels s'appuie un organe flexible métallisé (r), ainsi qu'une masse (m) solidaire de cet organe (r).

15. Dispositif selon la revendication 14, **caractérisé en ce que** lesdits moyens sensibles à la pression comprennent un boîtier fermé (180) sous vide portant ledit organe flexible (181).

16. Dispositif selon l'une des revendications 14 et 15, **caractérisé en ce que** lesdits moyens sensibles à la pression comprennent un élément piézoélectrique (PC).

17. Dispositif selon l'une des revendications 11 à 16, **caractérisé en ce que** les moyens de couplage comprennent un micro-circuit électronique (5) relié au capteur, et propre à mettre en forme une partie au moins des mesures de celui-ci, et des moyens de transmission (RVF2,BVF2,BRF2) des mesures mises en forme par ce circuit électronique (5).

18. Dispositif selon la revendication 17, **caractérisé en ce que** les moyens de transmission (RVF2,BVF2,BRF2) comprennent une boucle ouverte (BRF2) accordée incorporée au pneumatique (1), couplée à une boucle accordée homologue (BVF2) montée sur le véhicule.

19. Dispositif selon l'une des revendications 11 à 18, **caractérisé en ce que** les moyens d'alimentation comprennent une boucle ouverte (BRF1) accordée incorporée au pneumatique (1), couplée à une boucle accordée homologue (BVF1) montée sur le véhicule.

20. Dispositif selon l'une des revendications 11 à 19, **caractérisé en ce qu'**il comprend au moins un autre capteur miniature (180), en particulier sensible à la pression, également monté dans le pneumatique (1).

21. Dispositif selon l'une des revendications 11 à 20, **caractérisé en ce que** le pneumatique (1) comprend en outre une mémoire non volatile (121), et **en ce que** le circuit électronique (5) comprend des moyens aptes à inscrire dans cette mémoire (121) des données historiques relatives aux conditions subies par le pneumatique (1).

22. Dispositif selon la revendication 21, prise en combinaison avec la revendication 17, **caractérisé en ce que** les moyens de transmission (BVF2, BRF2, RVF2) sont réciproques, et **en ce que** lesdites données historiques sont inscrites après traitement à bord du véhicule.

23. Dispositif selon la revendication 22, **caractérisé en ce que** la puissance délivrée par les moyens d'alimentation (SVF1) est temporairement accrue lors de l'inscription des données historiques.

24. Pneumatique équipé d'au moins un capteur (4) et des circuits électroniques, selon l'une des revendications 11 à 23.

## Patentansprüche

1. Verfahren zum Überwachen des Zustandes eines in Betrieb befindlichen pneumatischen Radreifens (1), **gekennzeichnet durch** die folgenden Schritte:
- Anordnen eines Miniaturaufnehmers (4), der auf Beschleunigung (γ) empfindlich ist, in dem Reifen (1) nahe der Lauffläche (10), und
- Überwachen der Messwertänderungen dieses Aufnehmers (4), wobei die Messwerte, die in der Zone (BC) aufgenommen werden, in der die Lauffläche mit dem Boden in Kontakt ist, mit der Größe dieser Zone (BC) und **dadurch** mit dem Zustand des Reifens (1) in Beziehung stehen.

2. Verfahren nach Anspruch 1, **dadurch gekennzeichnet, dass** der Aufnehmer (4) so eingerichtet ist, dass er auf die Radialbeschleunigung (γ) empfindlich ist.

3. Verfahren nach einem der Ansprüche 1 und 2, **dadurch gekennzeichnet, dass** man den Augenblick (TL), in dem die Lauffläche (10) mit dem Boden in Kontakt gelangt, durch eine merkliche Änderung der Beschleunigung (γ) erfasst.

4. Verfahren nach einem der Ansprüche 1 bis 3, **dadurch gekennzeichnet, dass** man auch die Periode (Tp) der Augenblicke, in denen die Lauffläche (10) mit dem Boden in Kontakt gelangt und die von der Umdrehungsgeschwindigkeit (V) des Rades abhängt, erfaßt.

5. Verfahren nach einem der vorhergehenden Ansprüche, **dadurch gekennzeichnet, dass** wenigstens ein Teil der Messwerte (TL, Tp) zum Fahrzeug durch elektrische, magnetische oder elektromagnetische Kopplung übertragen wird.

6. Verfahren nach einem der vorhergehenden Ansprüche, **dadurch gekennzeichnet, dass** die Messwerte (TL, Tp) sich wenigstens auf die Periode der Phasen schwacher Beschleunigung und auf den Bruchteil dieser Periode, den sie einnehmen, beziehen.

7. Verfahren nach einem der vorhergehenden Ansprüche, **dadurch gekennzeichnet, dass** der Aufnehmer (4) durch eine Zelle mit Strom versorgt ist, die gleichfalls in dem Reifen (1) untergebracht ist.

8. Verfahren nach einem der vorhergehenden Ansprüche, **dadurch gekennzeichnet, dass** der Aufnehmer durch elektrische, magnetische oder elektromagnetische Kopplung (BVF1, BRF1) versorgt ist.

9. Verfahren nach einem der vorhergehenden Ansprüche, **dadurch gekennzeichnet, dass** man weiterhin in dem reifen (1) einen Miniatur-Druckaufnehmer (180) vorsieht.

10. Verfahren nach einem der vorhergehenden Ansprüche, **dadurch gekennzeichnet, dass** man weiterhin eine Prüfbank vorsieht, die in der Lage ist, im Reifen (1) gespeicherte Einträge nach Demontage desselben zu lesen.

11. Vorrichtung zum Überwachen des Zustandes eines in Betrieb befindlichen pneumatischen Fahrzeugradreifens (1), enthaltend:
- einen an dem Rad montierten Aufnehmer (4),
- Kopplungseinrichtungen (BVF2, BRF2) zum Übertragen von Kennwerten, die von dem Aufnehmer (4) gewonnen werden, zum Fahrzeug, und
- elektrische Versorgungseinrichtungen (SVF1, BVF1, BRF1),
**dadurch gekennzeichnet, dass** der Aufnehmer (4) ein auf Beschleunigung (γ) empfindlicher Miniaturaufnehmer ist, der in den Reifen (19) in dessen Laufflächenbereich (10) oder benachbart dazu eingebettet ist, und dass die an dem Rad befestigten Kopplungseinrichtungen die Kennwerte (TL, Tp), die sich auf die Messwerte beziehen, die in dem Augenblick genommen werden, in dem die Lauffläche (10) mit dem Boden in Kontakt gelangt, übertragen.

12. Vorrichtung nach Anspruch 11, **dadurch gekennzeichnet, dass** der Aufnehmer (4) so angeordnet ist, dass er auf die Radialbeschleunigung (γ) anspricht.

13. Vorrichtung nach Anspruch 12, **dadurch gekennzeichnet, dass** der Aufnehmer (4) so angeordnet ist, dass er die radial nach außen gerichteten Beschleunigungen (γ₁, γ₂, γ₃) begrenzt.

14. Vorrichtung nach einem der Ansprüche 11 bis 13, **dadurch gekennzeichnet, dass** der Aufnehmer (4) auf Druck empfindliche Einrichtungen, an die sich ein flexibles, metallisiertes Organ (r) anlegt, sowie eine mit diesem Organ (r) fest verbundene Masse (m) aufweist.

15. Vorrichtung nach Anspruch 14, **dadurch gekennzeichnet, dass** die auf Druck empfindlichen Einrichtungen aus einem geschlossenen, evakuierten Behälter (180), der das flexible Organ (181) trägt, bestehen.

16. Vorrichtung nach einem der Ansprüche 14 und 15, **dadurch gekennzeichnet, dass** die auf Druck empfindlichen Einrichtungen ein piezoelektrisches Element (PC) enthalten.

17. Vorrichtung nach einem der Ansprüche 11 bis 16, **dadurch gekennzeichnet, dass** die Kopplungseinrichtungen eine elektronische Mikroschaltung (5), die mit dem Aufnehmer verbunden und dazu eingerichtet ist, wenigstens einen Teil der Messwerte desselben zu formen, und Übertragungseinrichtungen (RVF2, BVF2, BRF2) für die Messwerte, die von der elektronischen Schaltung geformt worden sind, aufweisen.

18. Vorrichtung nach Anspruch 17, **dadurch gekennzeichnet, dass** die Übertragungseinrichtungen (RVF2, BVF2, BRF2) eine abgestimmte, offene Schleife (BRF2), die in den Reifen (1) eingebettet ist und mit einer vergleichbaren, am Fahrzeug montierten, abgestimmten Schleife (BVF2) gekoppelt ist, umfassen.

19. Vorrichtung nach einem der Ansprüche 11 bis 18, **dadurch gekennzeichnet, dass** die Versorgungseinrichtungen eine abgestimmte, offene Schleife (BRF1), die in den Reifen (1) eingebettet ist und mit einer vergleichbaren, am Fahrzeug montierten, abgestimmten Schleife (BVF1) gekoppelt ist, umfassen.

20. Vorrichtung nach einem der Ansprüche 11 bis 19, **dadurch gekennzeichnet, dass** sie wenigstens einen weiteren Miniaturaufnehmer (180), der insbesondere auf Druck empfindlich ist und ebenfalls in dem Reifen montiert ist, enthält.

21. Vorrichtung nach einem der Ansprüche 11 bis 20, **dadurch gekennzeichnet, dass** der Reifen (1) weiterhin einen nicht-flüchtigen Speicher (212) enthält und dass die elektronische Schaltung (5) Einrichtungen enthält, die dazu eingerichtet sind, in diesen Speicher (121) Vergangenheitsdaten einzuschreiben, die sich auf die vom Reifen (1) erlittenen Zustände beziehen.

22. Vorrichtung nach Anspruch 21 in Kombination mit Anspruch 17, **dadurch gekennzeichnet, dass** die Übertragungseinrichtungen (BVF2, BRF2, RVF2) wechselwirkend sind und die Vergangenheitsdaten nach Behandlung an Bord des Fahrzeugs eingeschrieben werden.

23. Vorrichtung nach Anspruch 22, **dadurch gekennzeichnet, dass** die von den Versorgungseinrichtungen (SCF1) zur Verfügung gestellte Leistung bei der Einschreibung der Vergangenheitsdaten vorübergehend erhöht wird.

24. Pneumatischer Reifen, der mit wenigstens einem Aufnehmer (4) und mit elektronischen Schaltungen versehen ist, nach einem der Ansprüche 11 bis 23.

## Claims

1. Process for the in-service monitoring of the condition of a tyre (1) of a wheel, **characterized by** the steps consisting in:
- providing in the tyre (1), near the tread (10), a miniature sensor (4), sensitive to the acceleration (γ), and
- monitoring the variations in the measurement from this sensor (4), the measurements made in the zone (BC) where the tread is in contact with the ground being related to the size of this zone (BC) and, thereby, to the condition of the tyre (1).

2. Process according to Claim 1, **characterized in that** the sensor (4) is disposed so as to be sensitive to the radial acceleration (γ).

3. Process according to one of Claims 1 and 2, **characterized in that** the moment (TL) at which the tread (10) is in contact with the ground is registered via a sensible variation in the acceleration (γ).

4. Process according to one of Claims 1 to 3, **characterized in that** the period (Tp) of the moments at which the tread (10) is in contact with the ground is also detected, this period being related to the speed of rotation (V) of the wheel.

5. Process according to one of the preceding claims, **characterized in that** a part at least of the measurements (TL, Tp) is transmitted to the vehicle by electrical, magnetic or electro-magnetic coupling.

6. Process according to one of the preceding claims, **characterized in that** the measurements (TL, Tp) pertain at least to the period of the phases of low acceleration, and to the fraction of this period which they occupy.

7. Process according to one of the preceding claims, **characterized in that** the sensor (4) is energized by a battery also housed in the tyre (1).

8. Process according to one of the preceding claims, **characterized in that** the sensor is energized by electrical, magnetic or electro-magnetic coupling (BVF1, BRF1).

9. Process according to one of the preceding claims, **characterized in that** a miniature pressure sensor (180) is furthermore provided in the tyre (1).

10. Process according to one of the preceding claims, **characterized in that** a test bench is furthermore provided which is capable of reading inscriptions placed in memory in the tyre (1) after the latter is dismantled.

11. Device for the in-service monitoring of the condition of a tyre (1) of a wheel of a vehicle, of the type comprising:
- a sensor (4) mounted on the wheel,
- coupling means (BVF2, BRF2) for transmitting to the vehicle indications derived from this sensor (4), and
- electrical energizing means (SVF1, BVF1, BRF1), **characterized in that** the sensor (4) is a miniature sensor sensitive to the acceleration (γ), implanted in the tread (10) of the tyre (1) or in the vicinity of the tread, and **in that** the coupling means, mounted on the wheel, transmit indications (TL, Tp) relating to the measurements made at the moment at which the tread (10) is in contact with the ground.

12. Device according to Claim 11, **characterized in that** the sensor (4) is disposed so as to be sensitive to the radial acceleration (γ).

13. Device according to Claim 12, **characterized in that** the sensor (4) is arranged so as to clip the radial accelerations (γ₁, γ₂, γ₃) towards the outside.

14. Device according to one of Claims 11 to 13, **characterized in that** the sensor (4) comprises pressure-sensitive means on which a metallized flexible member (r) bears, as well as a mass (m) secured to this member (r).

15. Device according to Claim 14, **characterized in that** the said pressure-sensitive means comprise an evacuated closed box (180) carrying the said flexible member (181).

16. Device according to one of Claims 14 and 15, **characterized in that** the said pressure-sensitive means comprise a piezoelectric element (PC).

17. Device according to one of claims 11 to 16, **characterized in that** the coupling means comprise an electronic microcircuit (5) connected to the sensor, and able to shape a part at least of the measurements therefrom, and means (RVF2, BVF2, BRF2) for transmitting the measurements shaped by this electronic circuit (5).

18. Device according to Claim 17, **characterized in that** the transmission means (RVF2, BVF2, BRF2) comprise a tuned open loop (BRF2) incorporated in the tyre (1), coupled to a counterpart tuned loop (BVF2) mounted on the vehicle.

19. Device according to one of Claims 11 to 18, **characterized in that** the energizing means comprise a tuned open loop (BRF1) incorporated in the tyre (1), coupled to a counterpart tuned loop (BVF1) mounted on the vehicle.

20. Device according to one of Claims 11 to 19, **characterized in that** it comprises at least one other miniature sensor (180), in particular one which is pressure sensitive, also mounted in the tyre (1).

21. Device according to one of Claims 11 to 20, **characterized in that** the tyre (1) furthermore comprises a nonvolatile memory (121), and **in that** the electronic circuit (5) comprises means able to write into this memory (121) historical data relating to the circumstances experienced by the tyre (1).

22. Device according to Claim 21, taken in combination with Claim 17, **characterized in that** the transmission means (BVF2, BRF2, RVF2) are reciprocal, and **in that** the said historical data are written after processing on board the vehicle.

23. Device according to Claim 22, **characterized in that** the power delivered by the energizing means (SVF1) is temporarily increased when writing the historical data.

24. Tyre equipped with at least one sensor (4) and with electronic circuits, according to one of Claims 11 to 23.
